# FASCICULE DE BREVET EUROPEEN

(11) **EP 3 856 607 B1**
(45) Date de publication et mention de la délivrance du brevet: **07.02.2024**
(21) Numéro de dépôt: 19779789.7
(22) Date de dépôt: 24.09.2019
(51) Int. Cl.: B62B 3/02, B62B 3/00

(54) **MODULE LOGISTIQUE PLIABLE**
ZUSAMMENKLAPPBARES LOGISTIKMODUL
FOLDABLE LOGISTICS MODULE

(30) Priorité: 24.09.2018 FR 1858684
(43) Date de publication de la demande: 04.08.2021
(73) Titulaire: Ythales Invest, 37520 La Riche (FR)
(72) Inventeur: CHERBONNIER, Yves, 37000 TOURS (FR)
(74) Mandataire: den Braber, Gérard Paul
(86) Numéro de dépôt international: PCT/EP2019/075663
(87) Numéro de publication internationale: WO 2020/064708

(56) Documents cités:
- WO-A1-2009/135771
- GB-A- 693 235
- US-A- 3 865 269
- US-A- 4 693 387
- US-A1- 2009 145 913

## Description

### DOMAINE TECHNIQUE

L'invention concerne un module logistique pliable. Le module logistique pliable peut être sous la forme par exemple, d'un roll conteneur dit « de sécurité ». L'invention concerne aussi une utilisation d'un module logistique pliable, par exemple, pour y stocker des objets de façon sécurisée.

### ETAT DE LA TECHNIQUE ANTERIEURE

La publication brevet FR 2 122 009 décrit un chariot pliant parallélépipédique à roulettes orientables. Le chariot comporte deux panneaux latéraux, deux panneaux d'extrémité, et un panneau de fond. Les deux panneaux d'extrémité sont chacun constitués par deux demi-panneaux formés par une demi-traverse haute et une demi-traverse basse réunies entre elles par un rectangle de treillis métallique. Les extrémités de chacune de ces demi-traverses, contiguës aux montants d'un panneau latéral, sont articulées au moyen d'une broche verticale dans un tronçon de U à ailes horizontales soudé à ce montant. Les demi-traverses correspondantes sont articulées entre elles par l'intermédiaire d'un autre tronçon de U à ailes horizontales dont les ailes ainsi que les extrémités des demi-traverses sont traversées respectivement par les deux branches verticales d'une double broche en épingle à cheveu. Le panneau de fond est articulé sur le longeron inférieur d'un des panneaux latéraux.
Le document US 2009/0145913 A1 divulgue un conteneur pliable à roues, comprenant une paire de ridelles pliables, une paire de ridelles rigides, et un agencement de plancher. Un agencement de toit peut être verrouillé par un cadenas.
Le document GB 693,235 A divulgue un conteneur pliable.

### EXPOSE DE L'INVENTION

Il existe un besoin pour une solution permettant à un module logistique pliable d'être déployé aisément en tant que cage verrouillable.

L'invention est définie dans les revendications 1 et 11. Des modes de réalisation préférés sont définis dans les revendications dépendantes. Un module logistique pliable comprend :
- une paire de ridelles pliables disposées face à face,
- une paire de ridelles rigides disposées face à face et entre les ridelles pliables,
- un agencement de plancher relié de façon pivotante à au moins une des ridelles rigides de sorte que l'agencement de plancher est apte à être rabattu contre au moins une des ridelles rigides, l'agencement de plancher constituant une butée pour les ridelles pliables lorsque l'agencement de plancher a été déployé, formant un plancher empêchant un pliage des ridelles pliables,
- un agencement de toit relié de façon pivotante à au moins une des ridelles rigides de sorte que l'agencement de toit est apte à être rabattu contre au moins une des ridelles rigides,
- au moins un organe de verrouillage disposé d'une des deux façons suivantes :
   - une première façon selon laquelle un organe de verrouillage est relié à un bord supérieur d'une ridelle pliable, un bord de l'agencement de toit étant apte à s'engager dans l'organe de verrouillage en dépliant la ridelle pliable lorsque l'agencement de toit a été déployé, et
   - une seconde façon selon laquelle un organe de verrouillage est relié à un bord de l'agencement de toit, un bord supérieur d'une ridelle pliable étant apte à s'engager dans l'organe de verrouillage en dépliant la ridelle pliable lorsque l'agencement de toit a été déployé.

Un tel module peut être utilisé pour former une cage verrouillable apte à stocker, au moins temporairement, des objets de façon sécurisée.

Dans un tel module logistique, l'agencement de toit peut être aisément verrouillé en faisant de sorte que les ridelles pliables soient légèrement pliées lorsque l'agencement de toit a été déployé, reposant sur les ridelles pliables. Puis, il suffit de déplier complément les ridelles pliables pour que l'agence de toit soit fixée aux ridelles pliables de façon verrouillée. Ainsi il est possible de former une cage fermée, verrouillée, protégeant ainsi des objets placés dans le module logistique pliable contre du vol et, plus généralement, contre tout accès malveillant.

Dans un mode de réalisation, l'organe de verrouillage comprend un creux apte à accueillir le bord de l'agencement de toit lorsque l'organe de verrouillage est relié à un bord supérieur d'une ridelle pliable, et l'organe de verrouillage comprend un creux apte à accueillir le bord supérieur d'une ridelle pliable lorsque l'organe de verrouillage est relié à un bord de l'agencement de toit.

Dans un mode de réalisation, l'organe de verrouillage a une forme d'un tronçon de tube coupé longitudinalement.

Dans un mode de réalisation, le module logistique pliable comprend une pluralité d'organes de verrouillage.

Dans un mode de réalisation, une partie des organes de verrouillage est relié à un bord supérieur d'une ridelle pliable de la paire de ridelles pliables, et une autre partie des organes de verrouillage est relié à un bord supérieur de l'autre ridelle pliable

Dans un mode de réalisation, une partie des organes de verrouillage est relié un bord de l'agencement de toit, et une autre partie des organes de verrouillage est relié à un autre bord de l'agencement de toit, l'un et l'autre bord étant opposés l'un à l'autre.

Dans un mode de réalisation, une ridelle rigide comprend un portillon donnant accès à un espace de chargement dans le module logistique pliable lorsque le portillon est ouvert.

Dans un mode de réalisation, le module logistique pliable comprend un mécanisme de verrouillage apte à verrouiller le portillon.

Dans un mode de réalisation, l'agencement de toit comprend deux parties, une partie étant reliée de façon pivotante à une ridelle rigide de la paire de ridelles rigides de sorte que cette partie de l'agencement de toit est apte à être rabattu contre cette ridelle rigide, l'autre partie de l'agencement de toit étant reliée de façon pivotante à l'autre ridelle rigide de sorte que cette autre partie de l'agencement de toit est apte à être rabattu contre cette autre ridelle rigide.

Dans un mode de réalisation, l'agencement de toit comprend une grille.

A des fins d'illustration, quelques modes de réalisation de l'invention sont décrits en détail en référence aux dessins annexés. Dans cette description, des caractéristiques supplémentaires sont présentées et des avantages deviennent apparents.

### DESCRIPTION SOMMAIRE DES DESSINS

- La figure 1 est une vue schématique en perspective d'un module logistique pliable dans un état déplié et prêt à l'emploi.
- La figure 2 est une vue schématique en perspective du module logistique pliable dans un état plié et prêt au rangement ou à une mise en place de celui-ci.
- La figure 3 est une vue schématique en perspective du module logistique pliable lors d'une première étape de mise en place dans laquelle le module logistique pliable est déplié.
- La figure 4 est une vue schématique en perspective du module logistique pliable lors d'une deuxième étape de mise en place dans laquelle un agencement de toit du module logistique pliable est déployé.
- La figure 5 est une vue schématique de dessus du module logistique pliable à la fin de la deuxième étape où l'agencement de toit a été déployé et est prêt à être verrouillé.
- La figure 6 est une vue schématique de dessus du module logistique pliable à la fin d'une troisième étape de mise en place dans laquelle l'agencement de toit est verrouillé.
- La figure 7 est une vue schématique en perspective d'une partie supérieure centre droite du module logistique pliable à la fin de la troisième étape de mise en place dans laquelle l'agencement de toit est verrouillé.
- La figure 8 est une vue schématique en perspective d'une partie inférieure gauche du module logistique pliable préalable à une quatrième étape de mise en place dans laquelle un agencement de plancher du module logistique pliable sera déployé.
- La figure 9 est une vue schématique en perspective du module logistique pliable lors de la quatrième étape de mise en place dans laquelle l'agencement de plancher du module logistique pliable est déployé.
- La figure 10 est une vue schématique en perspective du module logistique pliable lors d'une cinquième étape de mise en place dans laquelle une étagère du module logistique pliable est déployée.

### DESCRIPTION DE QUELQUES MODES DE REALISATION

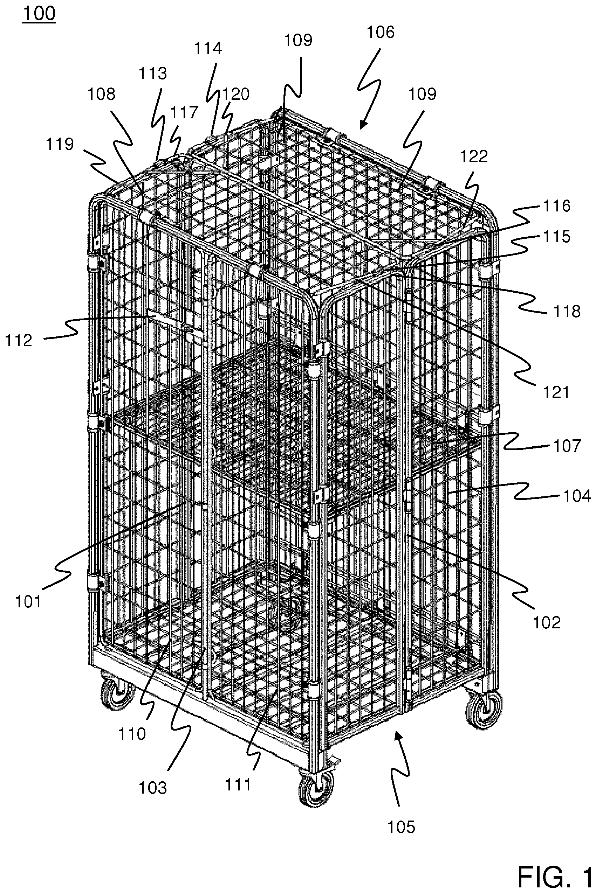

La figure 1 illustre schématiquement un module logistique pliable 100 dans un état déplié et prêt à l'emploi. La figure 1 présente une vue schématique en perspective d'un module logistique pliable 100 dans cet état. Dans ce mode de réalisation, le module logistique pliable 100 est sous la forme d'un roll conteneur dit « de sécurité ». Le module logistique pliable 100 sera désigné roll conteneur 100 dans ce qui suit pour des raisons de convenance.

Le roll conteneur 100 comprend une paire de ridelles pliables 101, 102, une paire de ridelles rigides 103, 104, un agencement de plancher 105, et agencement de toit 106. Dans ce mode de réalisation, le roll conteneur 100 comprend en outre une étagère 107. Les ridelles pliables 101, 102 sont disposées face à face. Une ridelle 101 de la paire de ridelles pliables 101, 102 sera désignée ridelle pliable gauche 101, l'autre ridelle 102 sera désignée ridelle pliable droite 102 pour des raisons de convenance. Les ridelles rigides 103, 104 sont également disposées face à face et entre les ridelles pliables 101, 102. Une ridelle 103 de la paire de ridelles rigides 103, 104 sera désignée ridelle rigide avant 103, l'autre ridelle 104 sera désignée ridelle rigide arrière 104 pour des raisons de convenance. L'adjectif « rigide » est employé pour indiquer que les ridelles rigides 103, 104 ne sont aptes à être pliées totalement, ou quasi totalement, contrairement aux ridelles pliables 101, 102.

Dans ce mode de réalisation, la ridelle pliable gauche 101 comprend deux demi ridelles reliées l'une à l'autre au moyen d'un mécanisme de charnière. Ce mécanisme de charnière peut s'étendre sur une hauteur totale des deux demi ridelles, ou seulement sur une partie de cette hauteur Ces remarques s'appliquent également à la ridelle pliable droite 102.

Dans ce mode de réalisation, l'agencement de plancher 105 comprend un seul plancher en monobloc. L'agencement de plancher 105 sera désigné plancher 105 dans ce qui suit pour des raisons de convenance. Dans ce mode de réalisation, le plancher 105 est relié de façon pivotante à la ridelle rigide arrière 104. Ainsi, le plancher 105 peut être rabattu contre la ridelle rigide arrière 104, Le plancher 105 constitue une butée pour les ridelles pliables 101, 102 lorsque le plancher 105 a été mise en place. Ainsi, dans cet état, le plancher 105 empêche un pliage des ridelles pliables 101, 102,

Dans ce mode de réalisation, l'agencement de toit 106 comprend deux parties 108, 109 qui forment chacune un demi-toit. L'une des deux parties sera désignée demi-toit avant 108, l'autre partie sera désignée demi-toit arrière 109 pour des raisons de convenance. Le demi-toit avant 108 est relié de façon pivotante à la ridelle rigide avant 103. Le demi-toit arrière 109 est relié de façon pivotante à la ridelle rigide arrière 104. Ainsi, le demi-toit avant 108 et le demi-toit arrière 109 peuvent être rabattus respectivement contre la ridelle rigide avant 103 et la ridelle rigide arrière 104.

Dans ce mode de réalisation, la ridelle rigide avant 103 comprend une paire de portillons 110, 111. Lorsqu'ils sont ouverts, ces portillons 110, 111 donnent accès à un espace de chargement dans le roll conteneur 100. A la figure 1, les portillons 110, 111 sont fermés empêchant ainsi une manipulation aisée du plancher 105 qui à été mis en place. A son tour, le plancher 105 empêche un pliage des ridelles pliables 101, 102. Le roll conteneur 100 comprend un mécanisme de verrouillage 112 permettant de verrouiller les portillons 110, 111 de façon à ce qu'ils restent fermés. Seule une personne possédant une bonne clé, ou un bon élément de déverrouillage d'un autre type, pourrait déverrouiller et ensuite ouvrir les portillons 110, 111.

Dans l'état déplié et prêt à l'emploi illustré à la figure 1, l'agencement de toit 106 est verrouillé de façon à ce que le roll conteneur 100 forme une cage fermée. Dans ce mode de réalisation, l'agencement de toit 106 est verrouillé au moyen de quatre organes de verrouillage 113, 114, 115, 116. Deux organes de verrouillage 113, 114 sont disposés sur un bord supérieur 117 de la ridelle pliable gauche 101. Un de ces deux organes de verrouillage 113, 114 sera désigné organe de verrouillage gauche avant 113, l'autre élément déverrouillage sera désigné organe de verrouillage gauche arrière 114 pour des raisons de convenance. Les deux autres éléments déverrouillage 115, 116 sont disposés sur un bord supérieur 118 de la ridelle pliable droite 102. Un de ces deux organes de verrouillage 115, 116 sera désigné organe de verrouillage droit avant 115, l'autre élément déverrouillage sera désigné organe de verrouillage droit arrière 116 pour des raisons de convenance.

Un bord gauche 119 du demi-toit avant 108 est engagé dans l'organe de verrouillage gauche avant 113. Un bord gauche 120 du demi-toit arrière 109 est engagé dans l'organe de verrouillage gauche arrière 114. Un bord droit 121 du demi-toit avant 108 est engagé dans l'organe de verrouillage droit avant 115. Un bord droit 122 du demi-toit arrière 109 est engagé dans l'organe de verrouillage droit arrière 116.

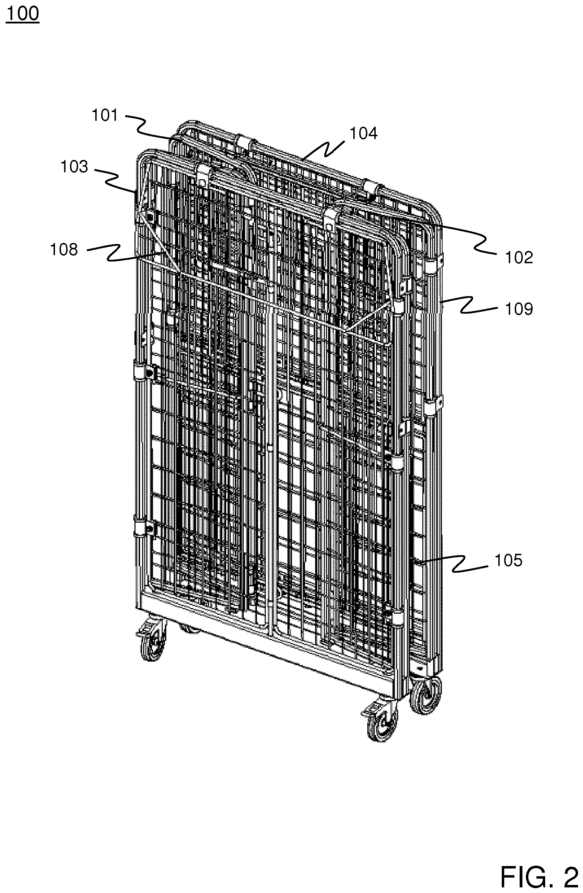

La figure 2 illustre schématiquement le roll conteneur 100 dans un état plié et prêt au rangement ou à une mise en place de celui-ci. La figure 2 présente une vue schématique en perspective du roll conteneur 100 dans cet état.

Dans l'état plié illustré à la figure 2, les ridelles pliables 101, 102 sont totalement, ou quasi-totalement, pliées et comprises entre la ridelle rigide avant 103 et la ridelle rigide arrière 104. Il y a un écart relativement mince entre la ridelle rigide avant 103 et la ridelle rigide arrière 104. Ainsi, le roll conteneur 100 est relativement compact dans cet état, ce qui facilite son rangement. En outre, un espace relativement petit suffit pour ranger le roll conteneur 100 en attendant un emploi prochain.

Dans l'état plié, le plancher 105 est rabattu contre la ridelle rigide arrière 104. Le demi-toit avant 108 est rabattu contre la ridelle rigide avant 103, par exemple, sur un côté extérieur de celle-ci. Le demi-toit arrière 109 est rabattu contre la ridelle rigide arrière 104, par exemple, sur un côté extérieur de celle-ci.

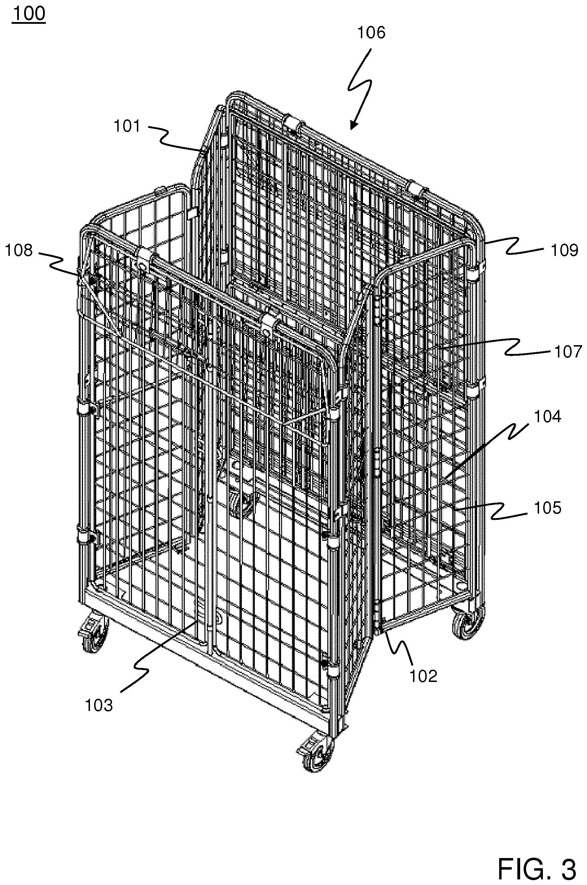

Le roll conteneur 100 peut être mis en place d'une manière qui sera décrite ci-après en référence aux figures 3 à 10. Ces figures illustrent, de façon séquentielle, le roll conteneur 100 à différents stades de cette mise en place qui comprend une série d'étapes.

Dans une première étape de mise en place, le roll conteneur 100 est déplié. Plus précisément, les ridelles pliables 101, 102 sont dépliées. Ce dépliage peut se faire en écartant les ridelles rigides 103, 104 l'une de l'autre, à partir de l'état plié illustré à la figure 2.

La figure 3 illustre schématiquement le roll conteneur 100 lors de la première étape de mise en place à un stade où le roll conteneur 100 est encore partiellement plié. La figure 3 présente une vue schématique en perspective du roll conteneur 100 à ce stade où les ridelles pliables 101, 102 sont encore légèrement pliées.

Dans une deuxième étape de mise en place, l'agencement de toit 106 est déployé. Dans cette étape, le demi-toit avant 108 et le demi-toit arrière 109 sont pivotés d'une position verticale vers une position horizontale. Dans la position verticale, ces demi-toits 108, 109 sont rabattus contre et côtoient respectivement la ridelle rigide avant 103 et la ridelle rigide arrière 104, comme illustré aux figures 2 et 3. Dans la position horizontale, les demi-toits 108, 109 couvrent l'espace de chargement du roll conteneur 100 comme illustré à la figure 1 Dans cette position, les demi-toits 108, 109 reposent sur les ridelles pliables 101, 102.

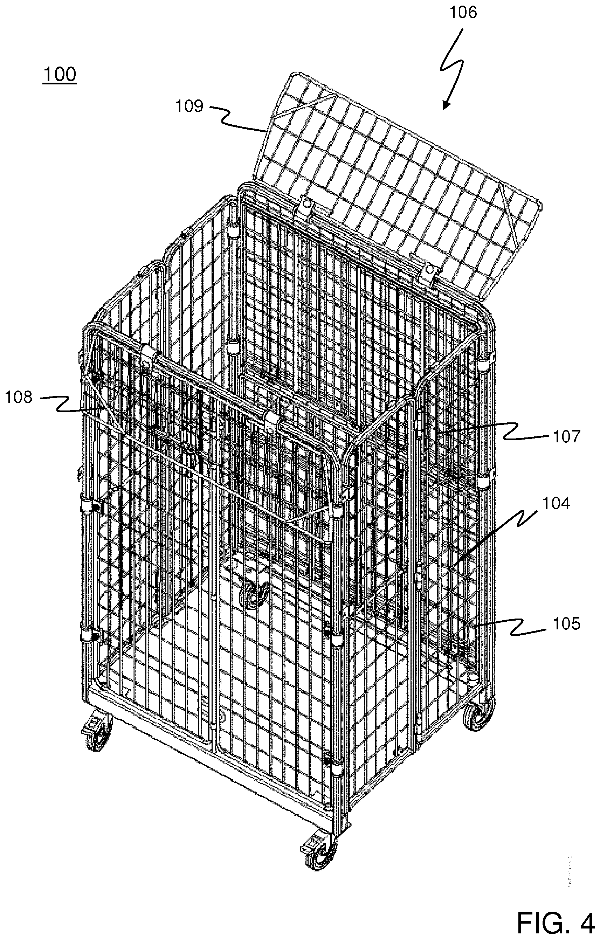

La figure 4 illustre schématiquement le roll conteneur 100 lors de la deuxième étape de mise en place dans laquelle l'agencement de toit 106 du module logistique pliable 100 est déployé. La figure 4 présente une vue schématique en perspective du roll conteneur 100 lors de cette étape à un stade où le demi-toit arrière 109 est en cours d'être pivoté de la position verticale vers la position horizontale. Dans cet exemple, le demi-toit avant 108 est encore dans la position verticale et sera pivoté vers la position horizontale par la suite.

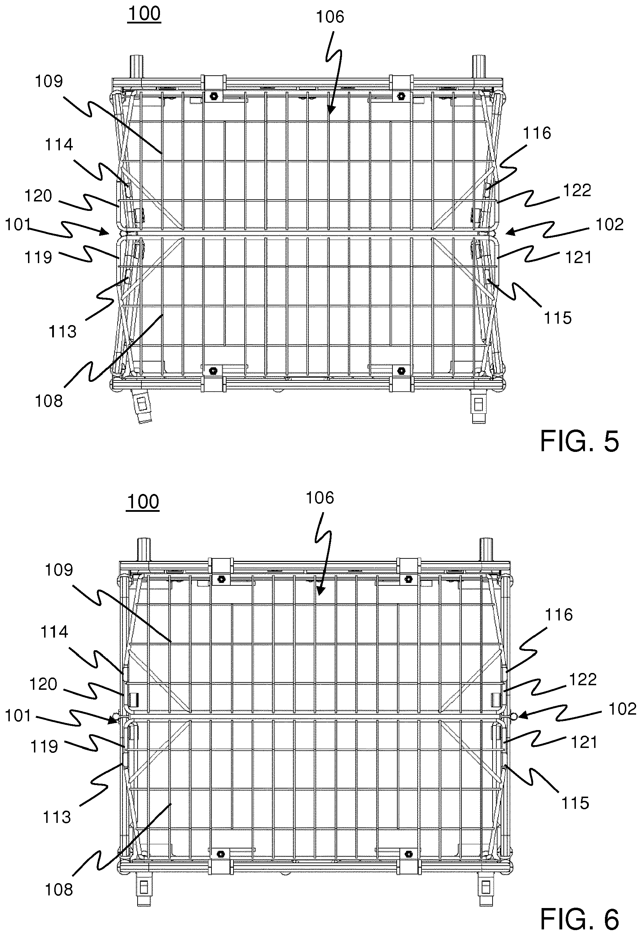

La figure 5 illustre schématiquement le roll conteneur 100 à la fin de la deuxième étape de mise en place dans laquelle l'agencement de toit 106 du module logistique pliable 100 est déployé. La figure 5 présente une vue schématique de dessus du roll conteneur 100 à ce stade où l'agencement de toit 106 a été déployé et est prêt à être verrouillé.

Plus précisément, la figure 5 illustre que la ridelle pliable gauche 101 est légèrement plié de sorte que l'organe de verrouillage gauche avant 113 et l'organe de verrouillage gauche arrière 114 sont respectivement face au bord gauche 119 du demi-toit avant 108 et au bord droit 120 du demi-toit arrière 109. De même, la ridelle pliable droite 102 est légèrement plié de sorte que l'organe de verrouillage droit avant 115 et l'organe de verrouillage droit arrière 116 sont respectivement face au bord droit 121 du demi-toit avant 108 et au bord droit 122 du demi-toit arrière 109. L'agencement de toit 106 est alors prêt à être verrouillé.

Dans une troisième étape de mise en place, l'agencement de toit 106 est verrouillé de la façon suivante. Au préalable, les ridelles pliables 101, 102 ont été mises dans un état où celles-ci sont légèrement pliées tel qu'illustré à la figure 5. L'agencement de toit 106 est ensuite verrouillé en dépliant les ridelles pliables 101, 102 au maximum.

La figure 6 illustre schématiquement le roll conteneur 100 à la fin de la troisième étape de mise en place dans laquelle l'agencement de toit 106 est verrouillé. La figure 6 présente une vue schématique de dessus du roll conteneur 100 à ce stade où l'agencement de toit 106 a été verrouillé.

Plus précisément, la figure 6 illustre que le bord gauche 119 du demi-toit avant 108 et le bord gauche 120 du demi-toit arrière 109 sont respectivement engagés dans l'organe de verrouillage gauche avant 113 et l'organe de verrouillage gauche arrière 114. De même, le bord droit 121 du demi-toit avant 108 et le bord droit 122 du demi-toit arrière 109 sont respectivement engagés dans l'organe de verrouillage droit avant 115 et l'organe de verrouillage droit arrière 116.

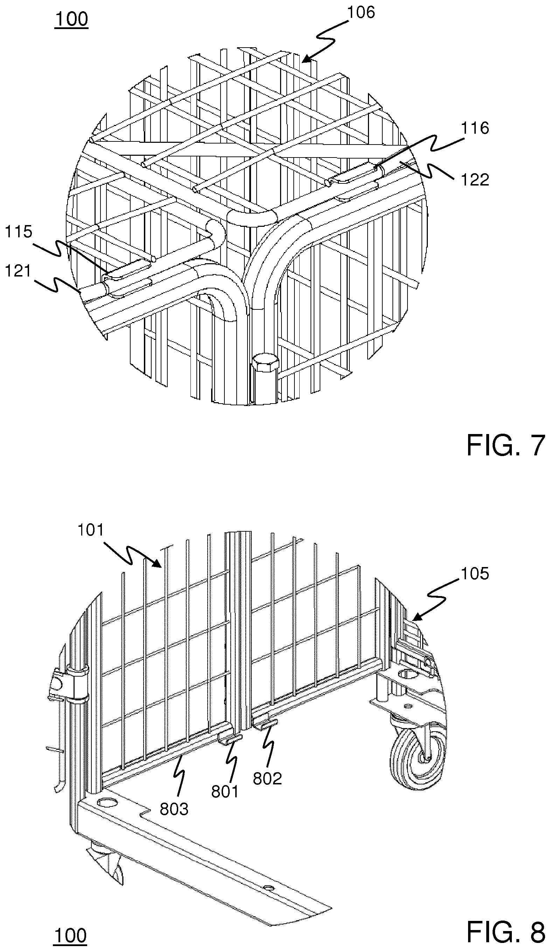

La figure 7 illustre schématiquement une partie supérieure centre droite du module logistique pliable 100 à la fin de la troisième étape de mise en place dans laquelle l'agencement de toit 106 est verrouillé. La figure 7 présente une vue schématique en perspective de la partie supérieure centre droite du roll conteneur 100 à ce stade où l'agencement de toit 106 a été verrouillé.

La figure 7 illustre plus en détail l'organe de verrouillage droit avant 115 et l'organe de verrouillage droit arrière 116 dans lesquels le bord droit 121 du demi-toit avant 108 et le bord droit 122 du demi-toit arrière 109 sont respectivement engagés. Dans ce mode de réalisation, ces organes de verrouillage 115, 116 ont chacun une forme d'un tronçon de tube coupé longitudinalement, ce qui est clairement visible à la figure 7. L'organe de verrouillage gauche avant 113 et l'organe de verrouillage gauche arrière 114, visibles à la figure 1, ont la même forme dans ce mode de réalisation.

Dans une quatrième étape de mise en place, le plancher 105 est déployé. Dans cette étape, le plancher 105 est pivoté d'une position verticale vers une position horizontale. Dans la position verticale, le plancher 105 est rabattu contre et côtoie la ridelle rigide arrière 104, comme illustré aux figures 2 à 4. Dans la position horizontale, le plancher 105 constitue un fond de l'espace de chargement du roll conteneur 100 comme illustré à la figure 1

La figure 8 illustre schématiquement une partie inférieure gauche du roll conteneur 100 préalable à la quatrième étape de mise en place dans laquelle le plancher 105 du module logistique pliable 100 sera déployé. La figure 8 présente une vue schématique en perspective de la partie inférieure gauche du roll conteneur 100 à ce stade.

Dans ce mode de réalisation, la ridelle pliable gauche 101 comprend deux organes de support 801, 802 fixés sur un bord inférieur 803 de cette ridelle 101. Les organes de support 801, 802 se situent essentiellement au milieu du bord inférieure 803 avec un organe de support de chaque côté du mécanisme de charnière de la ridelle pliable gauche 101. Dans ce mode de réalisation, les deux organes de support 801, 802 sont chacun sous la forme d'un profile en U, qui s'apparente à celle d'un tronçon de tube coupé longitudinalement, similaire aux organes de verrouillage 113, 114, 115, 116 visibles sur les figures 5 et 6. La ridelle pliable droite 102, visible sur la figure 1, peut également comprendre deux organes de support similaires sur un bord inférieur de celle-ci.

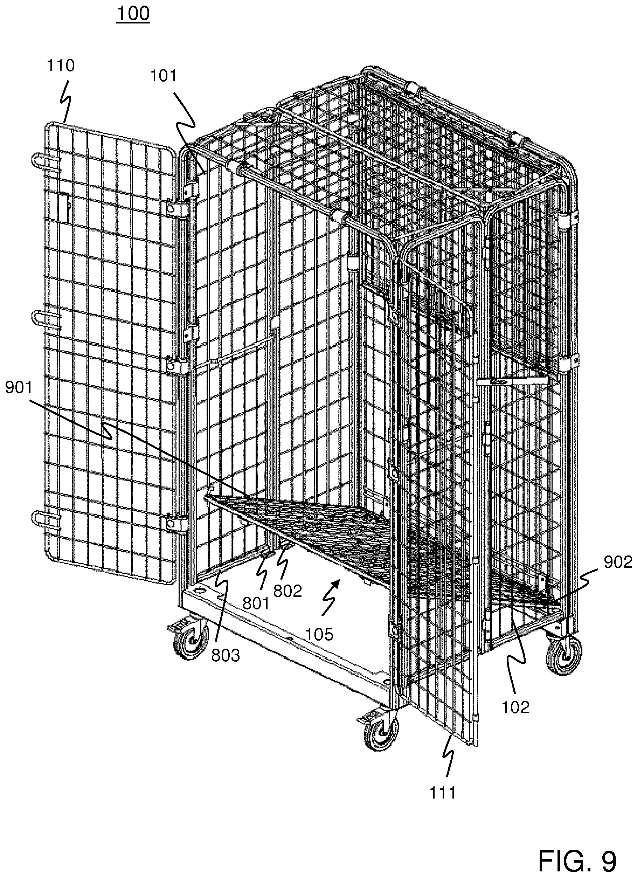

La figure 9 illustre schématiquement le roll conteneur 100 lors de la quatrième étape de mise en place dans laquelle l'agencement de plancher 105 du module logistique pliable 100 est déployé. La figure 9 présente une vue schématique en perspective du roll conteneur 100 à un stade où le plancher 105 est en cours d'être pivoté de la position verticale vers la position horizontale.

Lorsque le plancher 105 atteint la position horizontale, un bord gauche 901 du plancher 105 s'engage dans les organes de support 801, 802 sur le bord inférieur 803 de la ridelle pliable gauche 101. De même, un bord droit 902 du plancher 105 s'engage dans les organes de support sur le bord inférieur de la ridelle pliable droite 102.

Comme mentionné dans ce qui précède, le plancher 105 empêche un pliage des ridelles pliables 101, 102 lorsque le plancher 105 est dans la position horizontale comme illustré à la figure 1. Par conséquent, les bords gauches et droits 118, 119, 120, 121 de l'agencement de toit 106 ne peuvent pas se désengager des organes de verrouillage 113, 114, 115, 116. Ces bords de l'agencement de toit 106 sont emprisonnés dans les organes de verrouillage 113, 114, 115, 116. Ainsi, l'agencement de toit 106 restera verrouillé tant que le plancher 105 reste dans la position horizontale.

Dans une cinquième étape de mise en place, l'étagère 107 du module logistique pliable 100 est déployée. Dans cette étape, l'étagère 107 est pivotée d'une position verticale vers une position horizontale. Dans la position verticale, l'étagère 107 est rabattue contre et côtoie la ridelle rigide arrière 104, comme illustré aux figures 2 à 4 et 9. Dans la position horizontale, l'étagère 107 sépare l'espace de chargement du roll conteneur 100 en deux parties, une partie supérieure et une partie inférieure, comme illustré à la figure 1.

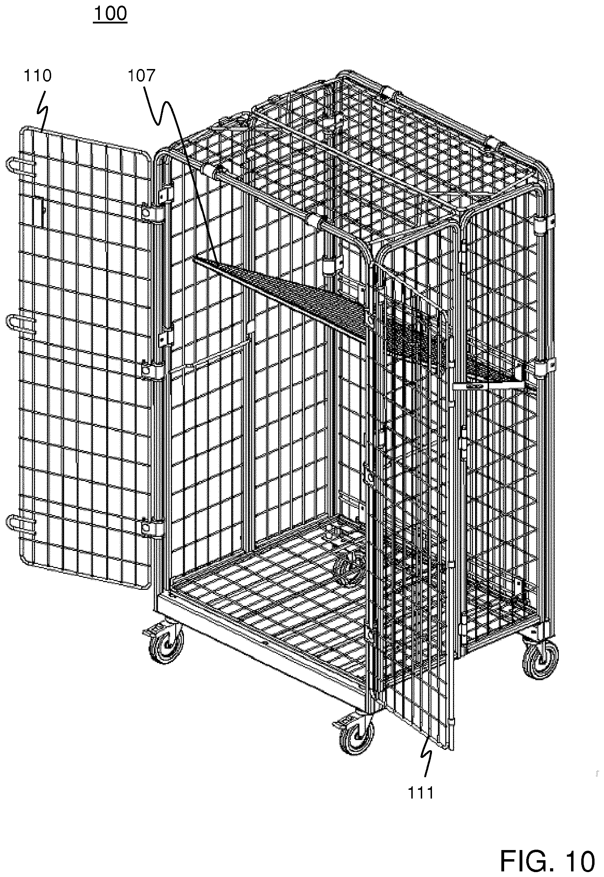

La figure 10 illustre schématiquement le roll conteneur 100 lors de la cinquième étape de mise en place dans laquelle une étagère 107 du module logistique pliable 100 est déployée. La figure 10 présente une vue schématique en perspective du roll conteneur 100 à un stade où l'étagère 107 est en cours d'être pivotée de la position verticale vers la position horizontale.

A la fin de la cinquième étape, le roll conteneur 100 peut être prêt à l'emploi, dans un état similaire à celui illustré à la figure 1, mais avec les portillons 110, 111 ouverts comme illustré aux figures 9 et 10. Des objets peuvent ainsi être placés dans l'espace de chargement du roll conteneur 100, dans la partie supérieure où les objets sont supportés par l'étagère 107, ou dans la partie inférieure où les objets sont supportés par le plancher 105. Une fois les objets placés dans le roll conteneur 100, les portillons 110, 111 peuvent être fermés et ensuite verrouillés au moyen du mécanisme de verrouillage 112 mentionné dans ce qui précède en référence à la figure 1. Le roll conteneur 100 forme ainsi une cage fermée qui contient les objets placés là-dedans. Ces objets sont ainsi protégés contre du vol et, plus généralement, contre tout accès malveillant.

Le roll conteneur 100 qui se trouve dans l'état déplié et prêt à l'emploi, comme illustré à la figure 1, peut être remis dans l'état plié et prêt au rangement, comme illustré à la figure 2, en effectuant les étapes décrites ci-dessus dans un sens inverse. Le roll conteneur 100 étant plié, il prend relativement peu de place, ce qui facilite son rangement. Un espace relativement petit suffit pour y ranger le roll conteneur 100 jusqu'à une prochaine utilisation.

### NOTES

Les modes de réalisation décrits dans ce qui précède en référence aux dessins sont présentés à titre d'illustration. L'invention peut être mise en oeuvre de nombreuses façons différentes. Afin d'illustrer cela, quelques alternatives sont indiquées sommairement.

L'invention peut être mise en oeuvre dans de nombreux types de produits et procédés logistiques. L'invention peut mise en oeuvre dans tout type de module logistique pliable. Les modes de réalisations présentés concernent un module logistique pliable sous la forme d'un roll conteneur. Dans d'autres modes de réalisation, le module logistique pliable peut-être, par exemple, sous la forme d'un conteneur sans roulettes ou d'un chariot apte à être tracté. De façon globale, le terme « module logistique pliable » doit donc être interprété de façon large. Ce terme embrasse toute entité dans laquelle des objets peuvent être placés pour des besoins de stockage et éventuellement de transport.

Il existe différentes façons de mettre en oeuvre un organe de verrouillage pour verrouiller un agencement de toit d'un module logistique pliable conforme à l'invention. Dans les modes de réalisation présentés un tel organe de verrouillage est relié à un bord supérieur d'une ridelle pliable, de sorte qu'un bord de l'agencement de toit peut s'engager dans l'organe de verrouillage en dépliant la ridelle pliable. Dans d'autres modes de réalisation, un organe de verrouillage peut être relié à un bord de l'agencement de toit de sorte qu'un bord supérieur d'une ridelle pliable peut s'engager dans l'organe de verrouillage en dépliant la ridelle pliable.

Dans les modes de réalisation présentés les organes de verrouillage sont sous la forme d'un tronçon de tube coupé longitudinalement qui peut s'apparenter, par exemple, à un profilé en U. Dans d'autres modes de réalisation, un organe de verrouillage peut être, par exemple, sous la forme d'un crochet ou d'un clip qui peut comprendre un métal résilient.

Il existe de nombreuses façons de mettre en oeuvre une paire de ridelles pliables dans un module logistique pliable conforme à l'invention. Dans les modes de réalisation présentés, les ridelles pliables se plient en deux. Dans d'autres modes de réalisation, les ridelles pliables peuvent se plier, par exemple, en trois, ou en quatre, ou en un autre nombre. Dans les modes de réalisation présentés, aucune des ridelles pliables ne comprend un portillon. Dans d'autres modes de réalisation, au moins une des ridelles pliables peut comprendre au moins un portillon.

Il existe de nombreuses façons de mettre en oeuvre une paire de ridelles rigides dans un module logistique pliable conforme à l'invention. Dans les modes de réalisation présentés une des ridelles rigides comprend une paire de portillons. Dans d'autres modes de réalisation, chacune des ridelles rigides peut comprendre au moins un portillon.

Dans les modes de réalisation présentés, les ridelles pliables et les ridelles rigides sont sous la forme d'une grille. Dans d'autres modes de réalisation, au moins une de ces ridelles peut être, par exemple, sous la forme d'une paroi fermée tel qu'un panneau.

Il existe de nombreuses façons de mettre en oeuvre un agencement de plancher dans un module logistique pliable conforme à l'invention. Dans les modes de réalisation présentés, l'agencement de plancher comprend un plancher. Dans d'autres modes de réalisation l'agencement de plancher peut comprendre, par exemple, deux demi-planchers similaires aux deux demi-toits dans les modes de réalisation présentés. Dans les modes de réalisation présentés, l'agencement de plancher comprend une grille. Une plaque fermée peut être posée sur cette grille afin de protéger des marchandises présentes dans le module logistique pliable contre des projections d'eau. Se référant au roll conteneur illustré à la figure 1, ces projections d'eau peuvent venir, par exemple, des roulettes lors d'un déplacement sur un sol mouillé. La plaque fermée posée sur la grille peut être, par exemple, une plaque de plastique.

Il existe de nombreuses façons de mettre en oeuvre un agencement de toit dans un module logistique pliable conforme à l'invention. Dans les modes de réalisation présentés, l'agencement de toit comprend deux demi-toits. Dans d'autres modes de réalisation l'agencement de toit peut comprendre, par exemple, un seul toit en monobloc. Dans les modes de réalisation présentés, l'agencement de toit comprend une grille. Dans d'autres modes de réalisation, l'agencement de toit peut comprendre, par exemple, une paroi fermée tel qu'un panneau.

Il existe de nombreuses façons de mettre en oeuvre un module logistique pliable conforme à l'invention comprenant au moins une étagère. Dans les modes de réalisation présentés, le module logistique pliable conforme à l'invention comprend une étagère pivotante. Dans d'autres modes de réalisation, un module logistique pliable conforme à l'invention peut comprendre une étagère escamotable qui, par exemple, peut être placée à une hauteur voulue. Dans d'autres modes de réalisation, un module logistique pliable conforme à l'invention peut être dépourvu d'étagères.

Un module logistique pliable conforme à l'invention peut comprendre des éléments permettant de réduire des bruits causés par une utilisation du module logistique pliable, par exemple, à cause de deux pièces qui entrent en contact. Une pièce qui susceptible d'entrer en contact avec une autre pièce peut être revêtue, au moins partiellement, d'une matière amortissante telle que, par exemple, du plastique ou du caoutchouc. Ce revêtement amortissant peut être réalisé, par exemple, par une plastification de la pièce concernée ou l'ajout d'un élément de matière amortissante, par exemple, par encliquetage. Ainsi il est possible de rendre un module logistique conforme à une norme antibruit, telle qu'une norme généralement désigné comme « la norme PIEK ».

Les remarques qui précèdent montrent que les modes de réalisation décrits en référence aux dessins illustrent l'invention plutôt qu'ils ne la limitent. Les signes de références n'ont aucun caractère limitatif. Le verbe « comprendre » dans une revendication n'exclut pas la présence d'autres éléments ou d'autres étapes que ceux ou celles listés dans la revendication. Il en va de même pour des verbes similaires tel que « comporter » et « inclure ». La mention d'un élément au singulier dans une revendication ayant pour objet un produit, n'exclut pas que le produit puisse comprendre une pluralité de tels éléments. De même, la mention d'une étape au singulier dans une revendication ayant pour objet un procédé, n'exclut pas que le procédé puisse comprendre une pluralité de telles étapes. Par conséquent, l'invention ne doit être limitée que par les revendications.

## Revendications

1. Module logistique pliable (100) comprenant :
- une paire de ridelles pliables (101. 102) disposées face à face,
- une paire de ridelles rigides (103, 104) disposées face à face et entre les ridelles pliables,
- un agencement de plancher (105) relié de façon pivotante à au moins une des ridelles rigides de sorte que l'agencement de plancher est apte à être rabattu contre au moins une des ridelles rigides, l'agencement de plancher constituant une butée pour les ridelles pliables lorsque l'agencement de plancher a été déployé, formant un plancher empêchant un pliage des ridelles pliables,
- un agencement de toit (106) relié de façon pivotante à au moins une des ridelles rigides de sorte que l'agencement de toit est apte à être rabattu contre au moins une des ridelles rigides,
- au moins un organe de verrouillage (113, 114, 115, 116) configuré pour verrouiller l'agencement de toit,
**caractérisé en ce que** l'organe de verrouillage est disposé d'une des deux façons suivantes :
- une première façon selon laquelle l'organe de verrouillage (113) est relié à un bord supérieur (117) d'une ridelle pliable, un bord (119) de l'agencement de toit étant apte à s'engager dans l'organe de verrouillage en dépliant la ridelle pliable lorsque l'agencement de toit a été déployé, et
- une seconde façon selon laquelle l'organe de verrouillage est relié à un bord de l'agencement de toit, un bord supérieur d'une ridelle pliable étant apte à s'engager dans l'organe de verrouillage en dépliant la ridelle pliable lorsque l'agencement de toit a été déployé.

2. Module logistique pliable selon la revendication 1, dans lequel l'organe de verrouillage (113) comprend un creux apte à accueillir le bord (119) de l'agencement de toit (106) lorsque l'organe de verrouillage est relié à un bord supérieur (117) d'une ridelle pliable (101), et l'organe de verrouillage comprend un creux apte à accueillir le bord supérieur d'une ridelle pliable lorsque l'organe de verrouillage est relié à un bord de l'agencement de toit.

3. Module logistique pliable selon l'une quelconque des revendications 1 et 2, dans lequel l'organe de verrouillage (113) a une forme d'un tronçon de tube coupé longitudinalement.

4. Module logistique pliable selon l'une quelconque des revendications 1 à 3, comprenant une pluralité d'organes de verrouillage (113, 114, 115, 116).

5. Module logistique pliable selon la revendication 4, dans lequel une partie des organes de verrouillage (113, 114) est relié à un bord supérieur (117) d'une ridelle pliable (101) de la paire de ridelles pliables (101, 102), et une autre partie des organes de verrouillage (115, 116) est relié à un bord supérieur (118) de l'autre ridelle pliable (102)

6. Module logistique pliable selon la revendication 4, dans lequel une partie des organes de verrouillage est relié un bord de l'agencement de toit, et une autre partie des organes de verrouillage est relié à un autre bord de l'agencement de toit, l'un et l'autre bord étant opposés l'un à l'autre.

7. Module logistique pliable selon l'une quelconque des revendications 1 à 6, dans lequel une ridelle rigide (103) comprend un portillon (110, 111) donnant accès à un espace de chargement dans le module logistique pliable lorsque le portillon est ouvert.

8. Module logistique pliable selon la revendication 7, comprenant un mécanisme de verrouillage (112) apte à verrouiller le portillon (110, 111).

9. Module logistique pliable selon l'une quelconque des revendications 1 à 8, dans lequel l'agencement de toit (106) comprend deux parties (108, 109), une partie (108) étant reliée de façon pivotante à une ridelle rigide (103) de la paire de ridelles rigides (103, 104) de sorte que cette partie de l'agencement de toit est apte à être rabattu contre cette ridelle rigide, l'autre partie (109) de l'agencement de toit étant reliée de façon pivotante à l'autre ridelle rigide (104) de sorte que cette autre partie de l'agencement de toit est apte à être rabattu contre cette autre ridelle rigide.

10. Module logistique pliable selon l'une quelconque des revendications 1 à 9, dans lequel l'agencement de toit (106) comprend une grille.

11. Utilisation d'un module logistique pliable (100) selon l'une quelconque des revendications 1 à 10 pour former une cage verrouillable apte à stocker, au moins temporairement, des objets de façon sécurisée.

## Patentansprüche

1. Zusammenklappbares Logistikmodul (100), umfassend:
- ein Paar zusammenklappbarer Bordwände (101, 102), die einander gegenüberliegend angeordnet sind,
- ein Paar starrer Bordwände (103, 104), die einander gegenüberliegend und zwischen den zusammenklappbaren Bordwänden angeordnet sind,
- eine Bodenanordnung (105), die so schwenkbar mit mindestens einer der starren Bordwände verbunden ist, dass die Bodenanordnung gegen mindestens eine der starren Bordwände geklappt werden kann, wobei die Bodenanordnung einen Anschlag für die zusammenklappbaren Bordwände ergibt, wenn die Bodenanordnung eingesetzt ist und einen Boden bildet, der ein Zusammenklappen der zusammenklappbaren Bordwände verhindert,
- eine Dachanordnung (106), die so schwenkbar mit mindestens einer der starren Bordwände verbunden ist, dass die Dachanordnung gegen mindestens eine der starren Bordwände geklappt werden kann,
- mindestens ein Verriegelungselement (113, 114, 115, 116), das zur Verriegelung der Dachanordnung konfiguriert ist,
**dadurch gekennzeichnet, dass** das Verriegelungselement nach einer der zwei folgenden Methoden angeordnet ist:
- einer ersten Methode, gemäß der das Verriegelungselement (113) mit einem oberen Rand (117) einer zusammenklappbaren Bordwand verbunden ist, wobei ein Rand (119) der Dachanordnung in das Verriegelungselement eingreifen kann, durch Einsetzen der zusammenklappbaren Bordwand, wenn die Dachanordnung eingesetzt ist, und
- einer zweiten Methode, gemäß der das Verriegelungselement mit einem Rand der Dachanordnung verbunden ist, wobei ein oberer Rand einer zusammenklappbaren Bordwand in das Verriegelungselement eingreifen kann, durch Einsetzen der zusammenklappbaren Bordwand, wenn die Dachanordnung eingesetzt ist.

2. Zusammenklappbares Logistikmodul nach Anspruch 1, wobei das Verriegelungselement (113) eine Vertiefung umfasst, die den Rand (119) der Dachanordnung (106) aufnehmen kann, wenn das Verriegelungselement mit einem oberen Rand (117) einer zusammenklappbaren Bordwand (101) verbunden ist, und wobei das Verriegelungselement eine Vertiefung umfasst, die einen oberen Rand einer zusammenklappbaren Bordwand aufnehmen kann, wenn das Verriegelungselement mit einem Rand der Dachanordnung verbunden ist.

3. Zusammenklappbares Logistikmodul nach einem der Ansprüche 1 und 2, wobei das Verriegelungselement (113) die Form eines längsgeschnittenen Rohrabschnitts aufweist.

4. Zusammenklappbares Logistikmodul nach einem der Ansprüche 1 bis 3, eine Vielzahl von Verriegelungselementen (113, 114, 115, 116) umfassend.

5. Zusammenklappbares Logistikmodul nach Anspruch 4, wobei ein Teil der Verriegelungselemente (113, 114) mit einem oberen Rand (117) einer zusammenklappbaren Bordwand (101) des Paares zusammenklappbarer Bordwände (101, 102) verbunden ist, und ein anderer Teil der Verriegelungselemente (115, 116) mit einem oberen Rand (118) der anderen zusammenklappbaren Bordwand (102) verbunden ist.

6. Zusammenklappbares Logistikmodul nach Anspruch 4, wobei ein Teil der Verriegelungselemente mit einem Rand der Dachanordnung verbunden ist, und ein anderer Teil der Verriegelungselemente mit einem anderen Rand der Dachanordnung verbunden ist, wobei der eine Rand gegenüber dem anderen liegt.

7. Zusammenklappbares Logistikmodul nach einem der Ansprüche 1 bis 6, wobei eine starre Bordwand (103) ein Türchen (110, 111) umfasst, das Zugang zu einem Ladebereich im zusammenklappbaren Logistikmodul bietet, wenn das Türchen geöffnet ist.

8. Zusammenklappbares Logistikmodul nach Anspruch 7, einen Verriegelungsmechanismus (112) umfassend, der das Türchen (110, 111) verriegeln kann.

9. Zusammenklappbares Logistikmodul nach einem der Ansprüche 1 bis 8, wobei die Dachanordnung (106) zwei Teile (108, 109) umfasst, wobei ein Teil (108) so schwenkbar mit einer starren Bordwand (103) des Paares starrer Bordwände (103, 104) verbunden ist, dass dieser Teil der Dachanordnung gegen diese starre Bordwand geklappt werden kann, wobei der andere Teil (109) der Dachanordnung so schwenkbar mit der anderen starren Bordwand (104) verbunden ist, dass dieser andere Teil der Dachanordnung gegen diese andere starre Bordwand geklappt werden kann.

10. Zusammenklappbares Logistikmodul nach einem der Ansprüche 1 bis 9, wobei die Dachanordnung (106) ein Gitter umfasst.

11. Verwendung eines faltbaren Logistikmoduls (100) nach einem der Ansprüche 1 bis 10 zur Bildung eines abschließbaren Käfigs, in dem Gegenstände zumindest vorübergehend sicher aufbewahrt werden können.

## Claims

1. A foldable logistic module (100) comprising:
- a pair of foldable panels (101, 102) disposed face to face,
- a pair of rigid panels (103, 104) disposed face to face and between the foldable panels,
- a floor arrangement (105) pivotably connected to at least one of the rigid panels so that the floor arrangement can be folded against at least one of the rigid panels, the floor arrangement constituting a stop for the foldable panels when the floor arrangement has been deployed, forming a floor preventing folding of the foldable panels,
- a roof arrangement (106) pivotably connected to at least one of the rigid panels so that the roof arrangement can be folded against at least one of the rigid panels,
- at least one locking member (113, 114, 115, 116) configured to lock the roof arrangement,
**characterised in that** the locking member is disposed in one of the following two ways:
- a first way according to which the locking member (113) is connected to a top edge (117) of a foldable panel, one edge (119) of the roof arrangement being adapted to engage in the locking member while unfolding the foldable panel when the roof arrangement has been deployed, and
- a second way according to which the locking member is connected to one edge of the roof arrangement, a top edge of a foldable panel being adapted to engage in the locking member while unfolding the foldable panel when the roof arrangement has been deployed.

2. A foldable logistic module according to claim 1, wherein the locking member (113) comprises a hollow adapted to accommodate the edge (119) of the roof arrangement (106) when the locking member is connected to a top edge (117) of a foldable panel (101), and the locking member comprises a hollow adapted to accommodate the top edge of a foldable panel when the locking member is connected to an edge of the roof arrangement.

3. A foldable logistic module according to either one of claims 1 and 2, wherein the locking member (113) is in the form of a tube portion cut longitudinally.

4. A foldable logistic module according to any one of claims 1 to 3, comprising a plurality of locking members (113, 114, 115, 116).

5. A foldable logistic module according to claim 4, wherein some of the locking members (113, 114) are connected to a top edge (117) of one foldable panel (101) of the pair of foldable panels (101, 102), and other locking members (115, 116) are connected to a top edge (118) of the other foldable panel (102).

6. A foldable logistic module according to claim 4, wherein some of the locking members are connected to one edge of the roof arrangement, and other locking members are connected to another edge of the roof arrangement, the one and the other edge being opposite to each other.

7. A foldable logistic module according to any one of claims 1 to 6, wherein a rigid panel (103) comprises a gate (110, 111) giving access to a loading space in the foldable logistic module when the gate is open.

8. A foldable logistic module according to claim 7, comprising a locking mechanism (112) adapted to lock the gate (110, 111).

9. A foldable logistic module according to any one of claims 1 to 8, wherein the roof arrangement (106) comprises two parts (108, 109), one part (108) being pivotably connected to a rigid panel (103) of the pair of rigid panels (103, 104) so that this part of the roof arrangement can be folded against this rigid panel, the other part (109) of the roof arrangement being pivotably connected to the other rigid panel (104) so that this other part of the roof arrangement can be folded against this other rigid panel.

10. A foldable logistic module according to any one of claims 1 to 9, wherein the roof arrangement (106) comprises a grid.

11. Use of a foldable logistic module according to any one of claims 1 to 10 to form a lockable cage adapted to store, at least temporarily, objects in a secure manner.
